# EUROPEAN PATENT APPLICATION

(11) **EP 4 006 806 A1**
(43) Date of publication of application: **01.06.2022**
(21) Application number: 20843646.9
(22) Date of filing: 16.06.2020
(51) Int. Cl.: G06Q 30/02

(54) **INFORMATION PROCESSING DEVICE, INFORMATION PROCESSING METHOD, AND INFORMATION PROCESSING PROGRAM**

(30) Priority: 24.07.2019 JP 2019136273; 05.11.2019 JP 2019201039
(71) Applicant: Sony Group Corporation, Tokyo 108-0075 (JP)
(72) Inventor: NODA, Atsushi, Tokyo 141-0022 (JP); ISOZAKI, Takashi, Tokyo 141-0022 (JP)
(74) Representative: 2SPL Patentanwälte PartG mbB
(86) International application number: PCT/JP2020/023497
(87) International publication number: WO 2021/014823

(57) **Abstract**

An information processing device (1) includes a determination unit (33) and a presentation unit (34). In a case where a calculation of an intervention effect generated in an objective variable by an intervention in any of a plurality of variables is performed on the basis of causal information (41) indicating a causal relationship between the plurality of variables, the determination unit (33) determines whether data of the variables necessary for the calculation is insufficient. The presentation unit (34) presents a user with information based on a determination result of the determination unit (33).

## Description

### Field

The present disclosure relates to an information processing device, an information processing method, and an information processing program.

### Background

Conventionally, there are deep learning, multiple regression, a decision tree, a random forest, and the like as techniques of predicting a value of a variable to be an object from other variables in an analysis of multivariable data. In addition to such techniques of performing prediction by using a correlation between variables, a data analysis based on a so-called causal graph generated by a technique of inferring a causal relationship between variables has been proposed (see, for example, Patent Literature 1).

### Citation List

### Patent Literature

Patent Literature 1: JP 2014-228991 A

### Summary

### Technical Problem

Incidentally, there is a technique of calculating a causal influence on a variable to be an object by intentionally changing a value of a variable (intervening in the variable) in a case where a person who uses data, such as a company performs a data analysis (intervention effect calculation). In such an intervention effect calculation, a highly-accurate calculation result can be output in a case where there is an infinite (or sufficient) amount of data of each variable. However, actually, since data of each variable is finite and the number of pieces of data of each variable varies, there is a possibility that accuracy of the calculation result is decreased. Then, in a case where a calculation result with low accuracy is presented, it cannot be said that appropriate information is presented to a user, and there is room for improvement.

Thus, the present disclosure proposes an information processing device, an information processing method, and an information processing program capable of presenting appropriate information to a user according to a data status for performing the intervention effect calculation.

### Solution to Problem

An information processing device includes a determination unit and a presentation unit. In a case where a calculation of an intervention effect generated in an objective variable by an intervention in any of a plurality of variables is performed on the basis of causal information indicating a causal relationship between the plurality of variables, the determination unit determines whether data of the variables necessary for the calculation is insufficient. The presentation unit presents a user with information based on a determination result of the determination unit.

### Brief Description of Drawings

FIG. 1 is a view illustrating an outline of an information processing method according to an embodiment of the present disclosure.
FIG. 2 is a block diagram illustrating a configuration of an information processing device according to the embodiment.
FIG. 3 is a view illustrating an example of customer information.
FIG. 4 is a view illustrating information presented by a presentation unit.
FIG. 5 is a view illustrating information presented by the presentation unit.
FIG. 6 is a view illustrating information presented by the presentation unit.
FIG. 7 is a view illustrating information presented by the presentation unit.
FIG. 8 is a view illustrating information presented by the presentation unit.
FIG. 9 is a view illustrating information presented by the presentation unit.
FIG. 10 is a view illustrating information presented by the presentation unit.
FIG. 11 is a view illustrating information presented by the presentation unit.
FIG. 12 is a view illustrating information presented by the presentation unit.
FIG. 13 is a view illustrating information presented by the presentation unit.
FIG. 14 is a view illustrating information presented by the presentation unit.
FIG. 15 is a view illustrating information presented by the presentation unit.
FIG. 16 is a view illustrating information presented by the presentation unit.
FIG. 17 is a flowchart illustrating a procedure of information processing executed by the information processing device according to the embodiment.
FIG. 18 is a block diagram illustrating an example of a hardware configuration of the information processing device according to the present embodiment. Description of Embodiments

In the following, embodiments of the present disclosure will be described in detail on the basis of the drawings. Note that in each of the following embodiments, overlapped description is omitted by assignment of the same reference sign to identical parts.

In addition, in the present description and the drawings, a plurality of components having substantially the same functional configuration may be distinguished by assignment of different numbers after the same reference sign. However, in a case where it is not specifically necessary to distinguish the plurality of components having substantially the same functional configuration from each other, only the same reference sign is assigned.

Also, for example, an example of a data analysis in a company that develops a business of providing a product or a service to a customer, such as a service business will be described in the following embodiments. Note that an information processing device, an information processing method, and an information processing program according to an embodiment are not limited to a case of being applied to a data analysis by a company, that is, a data analysis in a business field, and can be applied to a data analysis in various fields such as a medical field and an educational field, for example. In other words, the information processing device, the information processing method, and the information processing program according to the embodiment can be applied to a data analysis that handles a plurality of variables.

<<1. Outline of information processing method according to embodiment>>

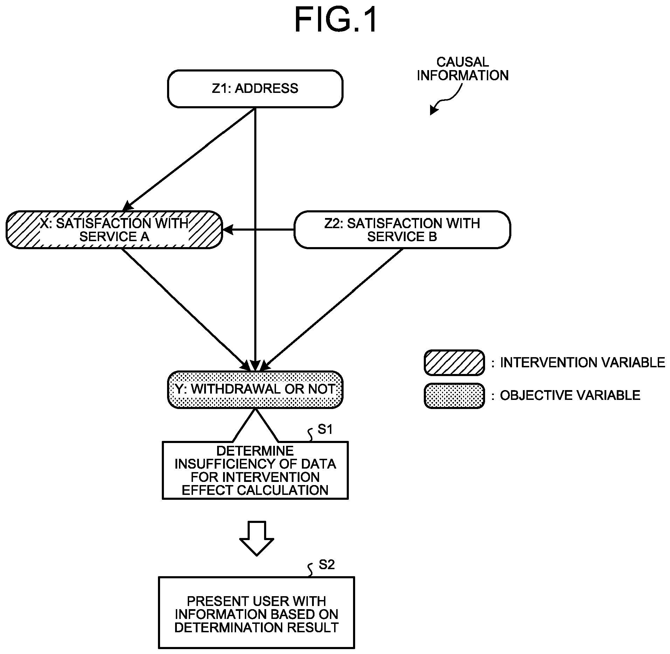

First, an outline of an information processing method according to an embodiment will be described with reference to FIG. 1. FIG. 1 is a view illustrating an outline of an information processing method according to an embodiment of the present disclosure. Causal information indicating a causal relationship between a plurality of variables, that is, a so-called causal graph is illustrated in FIG. 1. With respect to four variables X, Y, Z1, and Z2, directions of cause and effect among the variables are indicated by arrows (cause → effect) in the causal graph in the example illustrated in FIG. 1. That is, the causal graph illustrated in FIG. 1 is a directed graph. Also, the causal information illustrated in FIG. 1 is, in other words, information of a graphical model with a probability distribution in which variables of probabilistic/statistical cause and effect are connected by the arrows.

Note that arbitrary variables such as categorical variables or continuous variables may be used. However, it is preferable that the variables are specifically the categorical variables. In a case of a continuous variable, a categorical variable can be acquired by n-equal division of a distribution function (n is a natural number of 2 or larger), or the like.

Also, the causal graph illustrated in FIG. 1 is an example of causal information. The causal information only needs to be information from which a causal relationship between a plurality of variables can be grasped, and may be information in which the causal relationship between the variables is listed.

Such causal information is generated by utilization of attribute data (such as age, sex, or address) of customers which data is possessed by a company, data of a questionnaire performed on each customer, and the like, for example.

For example, causal information generated by utilization of data of a company that provides a service A and a service B to customers who are (current and past) members is illustrated in FIG. 1. Specifically, the variable Z1 illustrated in FIG. 1 is data of addresses of the customers who are members. Also, the variable Z2 is questionnaire data indicating satisfaction with the service B. Moreover, the variable X is questionnaire data indicating satisfaction with the service A. Furthermore, the variable Y is data indicating whether the customers have withdrawn from the services.

Note that the service A and the service B are not limited to a case of being provided from the same company, and may be provided from different companies. That is, the causal information (causal graph) is not limited to a case of being generated by utilization of data of one company, and may be generated by utilization of data of a plurality of companies.

Here, for example, it is assumed that a company desires to see how much the variable Y changes in a case where the variable X in the causal information is intentionally changed for the purpose of reducing a withdrawal rate of the customers. That is, it is assumed that a calculation of an intervention effect generated in the variable Y to be an object in a case where the intervention is performed in the variable X (hereinafter, intervention effect calculation or intervention calculation) is performed. Note that the variable X to be intervened may be referred to as an intervention variable X, and the variable Y to be an object may be referred to as an objective variable Y in the following.

Conventionally, in such an intervention effect calculation, a highly-accurate calculation result can be output in a case where there is an infinite (or sufficient) amount of data of each variable. However, actually, data of each variable is finite and there is also a case where the number of pieces of data of variables varies. In this case, there is a possibility that accuracy of the calculation result is decreased. That is, conventionally, it cannot be said that appropriate information is presented to a user since even a calculation result with low accuracy is presented to the user.

Thus, in the information processing method according to the embodiment, information corresponding to a data status for performing the intervention effect calculation is presented to the user. This point will be described with reference to FIG. 1.

Note that it is assumed that the causal information illustrated in FIG. 1 is generated in advance on the basis of data of customers of a company. Also, it is assumed in FIG. 1 that the variable X in which a user (such as a person in charge or the like of the company) wants to intervene (intervention variable X) and the objective variable Y the intervention effect on which is desired to be seen are received from the user. That is, in FIG. 1, it is assumed to intervene in data of the satisfaction with the service A and to see a change in withdrawal or not of the members as the intervention effect.

As illustrated in FIG. 1, in the information processing method according to the embodiment, it is determined whether data of the variables X, Y, Z1, and Z2 necessary for an intervention effect calculation is insufficient in a case where a calculation of an intervention effect generated in the objective variable Y by an intervention in any variable (intervention variable X) among the plurality of variables X, Y, Z1, and Z2 is performed on the basis of the causal information (Step S1).

The data of the variables referred to herein includes data acquired by a combination of a plurality of variables in addition to data of each variable, and details thereof will be described later.

Then, in the information processing method according to the embodiment, information based on a determination result in Step S1 is presented to the user (Step S2).

Specifically, in the information processing method according to the embodiment, in a case where it is determined that the data of the variables X, Y, Z1, and Z2 necessary for the intervention effect calculation is not insufficient (data is sufficient), the intervention effect calculation is performed on the basis of intervention contents received from the user, and a calculation result is presented to the user.

On the other hand, in the information processing method according to the embodiment, in a case where it is determined that the data of the variables X, Y, Z1, and Z2 necessary for the intervention effect calculation is insufficient, information indicating that the intervention effect calculation is impossible, information indicating a variable with insufficient data, information indicating a proposed measure to satisfy the data of the variables necessary for the intervention effect calculation, and the like are presented to the user, for example. Note that details of the information to be presented to the user will be described later.

That is, in the information processing method according to the embodiment, in a case where the data is insufficient, notification indicating that the intervention effect calculation with high accuracy cannot be performed with the current data is given, or a proposed measure that enables the intervention effect calculation with high accuracy is presented to the user instead of performance of the intervention effect calculation.

As a result, it is possible to prevent a calculation result with low accuracy from being presented without intention of the user, and it is also possible to tell the user that data is insufficient with the current number of pieces of data. Thus, in the information processing method according to the embodiment, it is possible to present appropriate information to the user according to a data status for performing the intervention effect calculation.

<<2. Configuration of information processing device according to embodiment>>

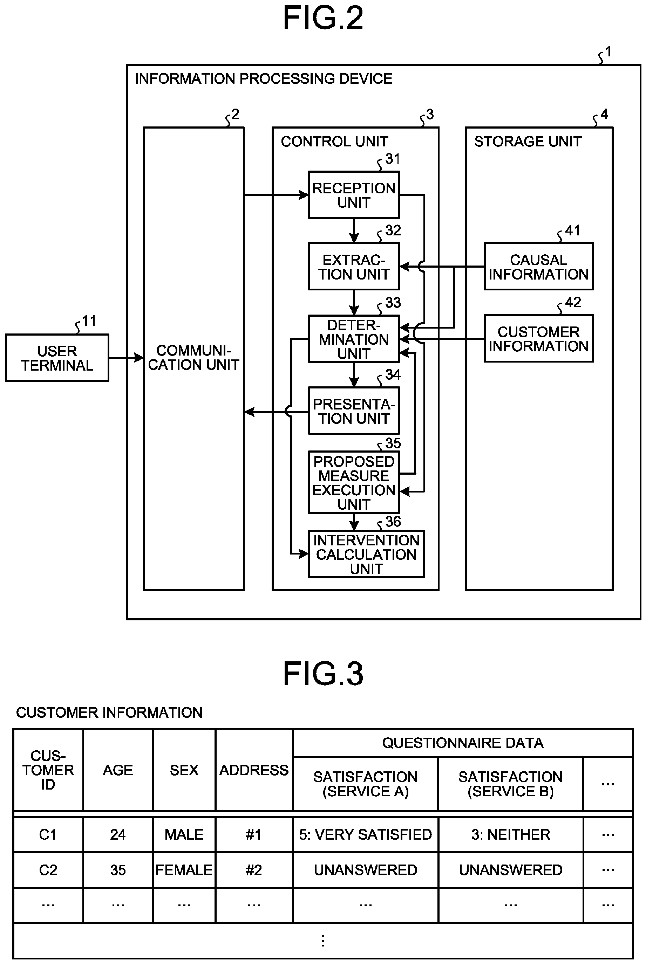

Next, a configuration of an information processing device 1 according to the embodiment will be described with reference to FIG. 2. FIG. 2 is a block diagram illustrating the configuration of the information processing device 1 according to the embodiment. As illustrated in FIG. 2, the information processing device 1 is communicably connected to a user terminal 11 via a predetermined network (not illustrated). Note that a case where the information processing device 1 and the user terminal 11 are configured separately has been described in the present embodiment. However, in another embodiment, a terminal device configured in such a manner that functions of the information processing device 1 and the user terminal 11 are integrated may be adopted.

The user terminal 11 is, for example, a terminal device used by a user such as a person in charge of a company or an individual. For example, the user terminal 11 is realized by, for example, a smartphone, a tablet terminal, a notebook personal computer (PC), a desktop PC, a cellular phone, a personal digital assistant (PDA), or the like.

Also, the information processing device 1 includes a communication unit 2, a control unit 3, and a storage unit 4. The communication unit 2 is realized, for example, by a network interface card (NIC) or the like. Then, the communication unit 2 transmits and receives information to and from the user terminal 11 via a predetermined network.

The control unit 3 includes a reception unit 31, an extraction unit 32, a determination unit 33, a presentation unit 34, a proposed measure execution unit 35, and an intervention calculation unit 36. The storage unit 4 stores causal information 41 and customer information 42.

Here, the information processing device 1 includes, for example, a computer including a central processing unit (CPU), a read only memory (ROM), a random access memory (RAM), a data flash, an input/output port, and the like, and various circuits.

The CPU of the computer function as the reception unit 31, the extraction unit 32, the determination unit 33, the presentation unit 34, the proposed measure execution unit 35, and the intervention calculation unit 36 of the control unit 3, for example, by reading and executing a program stored in the ROM.

Furthermore, at least one or all of the reception unit 31, the extraction unit 32, the determination unit 33, the presentation unit 34, the proposed measure execution unit 35, and the intervention calculation unit 36 of the control unit 3 can be configured by hardware such as an application specific integrated circuit (ASIC) or a field programmable gate array (FPGA).

Also, the storage unit 4 corresponds to the RAM and the data flash, for example. The RAM and the data flash can store the causal information 41, the customer information 42, information of various programs, and the like. Note that the information processing device 1 may acquire the above-described programs and various kinds of information through another computer or a portable recording medium connected by a wired or wireless network.

As illustrated in FIG. 1, the causal information 41 is information indicating a probabilistic or statistical causal relationship between a plurality of variables. For example, the causal information 41 may be created on the basis of a statistically estimated model of a causal Bayesian network or a causal structural equation (see, for example, Patent Literature 1), or may be stored as information in which a causal relationship between the variables is associated by an expert or a user.

The customer information 42 is data of customers which data is possessed by a company to which the user belongs. FIG. 3 is a view illustrating an example of the customer information 42. Note that the customer information 42 may be generated for each company, or data of customers which data is possessed by a plurality of companies may be integrated.

As illustrated in FIG. 3, the customer information 42 includes items such as a "customer ID", "age", "sex", "address", and "questionnaire data".

The "customer ID" is identification information for identifying a customer. The "age" is information indicating an age of the customer. Note that the "age" may be an accurate age as illustrated in FIG. 3, or may be abstracted as "twenties". The "sex" is information indicating sex of the customer. The "address" is information indicating an address of the customer. The "address" may be a detailed address, or may be abstracted as "Tokyo" or "Kanto region".

The "questionnaire data" is information indicating an answer to questionnaire performed on the customer by a company. Note that "unanswered" in the "questionnaire data" illustrated in FIG. 3 indicates that questionnaire has not been performed, or no answer has been made although questionnaire has been performed.

Next, each of functional blocks (reception unit 31, extraction unit 32, determination unit 33, presentation unit 34, proposed measure execution unit 35, and intervention calculation unit 36) of the control unit 3 will be described.

The reception unit 31 receives various kinds of information from the user via the user terminal 11. For example, the reception unit 31 receives information for performing the intervention effect calculation from the user. Specifically, from the user, the reception unit 31 receives selection of an intervention variable that is a variable to be intervened and an objective variable that is a variable, an intervention effect on which is desired to be seen, from among variables in the causal information 41. Also, the reception unit 31 receives selection operation by the user with respect to options presented from the information processing device 1. Specifically, in a case where there is missing of data in a variable extracted by the extraction unit 32 (described later), the reception unit 31 receives selection operation to specify processing with respect to the missing variable. Furthermore, in a case where the intervention effect calculation cannot be performed, the reception unit 31 receives selection operation to specify a proposed measure to be executed by the proposed measure execution unit 35 (described later) from among a plurality of proposed measures presented to the user. Also, in a case where the intervention effect calculation can be performed, the reception unit 31 receives the intervention contents (changed contents) with respect to the intervention variable.

In a case where the intervention variable and the objective variable are received by the reception unit 31, the extraction unit 32 extracts variables necessary for the intervention effect calculation from among the variables included in the causal information 41. Specifically, on the basis of the causal information 41, the extraction unit 32 extracts a variable (such as confounding variable) having a direct or indirect causal relationship with the intervention variable. In other words, the extraction unit 32 extracts variables with causal arrows illustrated in FIG. 1 being connected to the intervention variable X (variables Z1 and Z2) and a variable with the causal arrows being connected to the variables (variables Z1 and Z2) but not being connected to the intervention variable X.

The determination unit 33 determines whether the data of the variables necessary for the intervention effect calculation is insufficient in a case where the intervention effect calculation is performed on the basis of the causal information 41. First, prior to determining the data insufficiency, the determination unit 33 determines whether a variable with missing data is included in the variables extracted by extraction unit 32, the intervention variable, and the objective variable. The variable with the missing data indicates a case where data of a part of possible values of a certain variable does not exist. For example, with respect to frequency distribution data of a continuous variable, it is meant that data of a part of values (classes) of continuous values (classes) does not exist (is missing).

In a case where there is a variable with missing data (hereinafter, missing variable), the determination unit 33 presents the user with a method of handling the missing variable and receives selection by the user. For example, the determination unit 33 presents the following three as methods of handling the missing variable.
(1) Excluding data having a missing value
(2) Complementing a missing value
(3) Treating a missing value as one categorical value

### (1) Excluding data having a missing value

In a case where "excluding data having a missing value" is selected, the determination unit 33 performs aggregation processing in a following stage on the assumption that there is no data for missing data in the missing variable.

### (2) Complementing a missing value

In a case where "complementing a missing value" is selected, the determination unit 33 complements missing data in the missing variable. For example, in a case where the missing variable is a variable having continuous values (continuous variable), the determination unit 33 complements data of the missing value by using, for example, an average value or a median value of data of other values included in the missing variable. Also, in a case where the missing variable is a categorical variable, the determination unit 33 complements data of the missing value by using, for example, a representative value in the missing variable.

### (3) Treating a missing value as one categorical value

In a case where "treating a missing value as one categorical value" is selected, the determination unit 33 treats the missing data as it is. Specifically, the determination unit 33 adds information indicating that there is a missing to the missing value in the missing variable and performs aggregation processing in the following stage.

In a case where data of variables is not missing, and in a case where processing corresponding to a method of handling a missing variable which method is selected by the user is completed, the determination unit 33 aggregates data of these variables. Specifically, the determination unit 33 performs the aggregation processing of aggregating data for each combination of the intervention variable, the objective variable, and the variables extracted by the extraction unit 32.

Then, the determination unit 33 determines whether the number of pieces of data is equal to or larger than a predetermined threshold for each combination of the variables for which combination the aggregation is performed by the aggregation processing. In a case where the number of pieces of data is equal to or larger than the threshold for all the combinations of the variables, the determination unit 33 determines that the data of the variables necessary for the intervention effect calculation is sufficient (not insufficient). That is, the determination unit 33 determines that the intervention effect calculation is possible.

On the other hand, in a case where there is a combination of the variables, in which combination the number of pieces of data is smaller than the threshold, among the combinations of the variables, the determination unit 33 determines that the data of the variables necessary for the intervention effect calculation is insufficient. That is, the determination unit 33 determines that the intervention effect calculation is impossible.

The determination unit 33 notifies the presentation unit 34 and the intervention calculation unit 36 of a determination result. Note that the determination result presented to the presentation unit 34 includes information indicating whether the data of the variables necessary for the intervention effect calculation is insufficient, information of the combination of the variables with insufficient data, and the like.

Furthermore, in a case where a proposed measure is executed by the proposed measure execution unit 35, the determination unit 33 determines whether the data of the variables necessary for the intervention effect calculation is insufficient. That is, the determination unit 33 determines whether the data insufficiency is solved by execution of the proposed measure by the proposed measure execution unit 35.

The presentation unit 34 presents the user with information based on a determination result of the determination unit 33. For example, in a case where the determination unit 33 determines that the data of the variables necessary for the intervention effect calculation is sufficient, the presentation unit 34 presents the user with information indicating that the intervention effect calculation is possible.

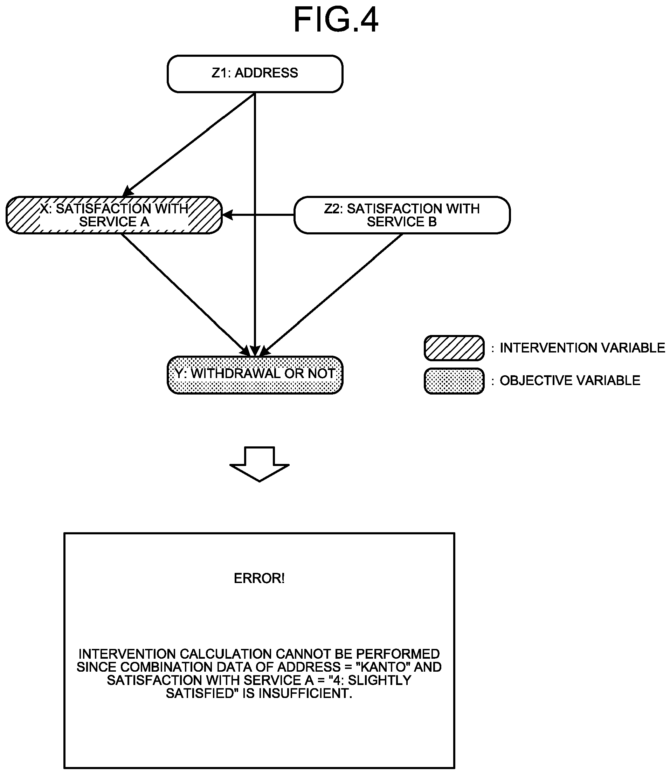

On the other hand, in a case where the determination unit 33 determines that the data of the variables necessary for the intervention effect calculation is insufficient, the presentation unit 34 presents the user with information indicating that the intervention effect calculation is impossible. Also, together with the information indicating that the intervention effect calculation is impossible, the presentation unit 34 presents information of the insufficient data and a proposed measure to satisfy the data. Note that details of the information presented by the presentation unit 34 will be described later with reference to FIG. 4 to FIG. 16.

The proposed measure execution unit 35 executes the proposed measure presented to the user by the presentation unit 34. For example, in a case where a plurality of proposed measures is presented by the presentation unit 34, the reception unit 31 receives selection of one proposed measure from the user, and further receives an execution instruction instructing execution of the selected proposed measure. Then, in a case where the execution instruction for the proposed measure is received by the reception unit 31, the proposed measure execution unit 35 executes the proposed measure. Note that specific examples of the proposed measure executed by the proposed measure execution unit 35 will be described later with reference to FIG. 4 to FIG. 16.

In a case where the determination unit 33 determines that the data of the variables necessary for the intervention effect calculation is sufficient, the intervention calculation unit 36 executes the intervention effect calculation. Specifically, the intervention calculation unit 36 calculates an intervention effect in the objective variable on the basis of the intervention contents with respect to the intervention variable received from the user by reception unit 31.

Then, the intervention calculation unit 36 notifies the presentation unit 34 of a calculation result of the intervention effect calculation, and the presentation unit 34 presents the user with intervention information based on the calculation result. Note that details of the intervention information presented to the user will be described later.

<<3. Specific example of information presented to user>>

Next, details of the information presented to the user by the presentation unit 34 will be described with reference to FIG. 4 to FIG. 16.

FIG. 4 to FIG. 16 are views illustrating the information presented by the presentation unit 34.

As illustrated in FIG. 4, for example, the presentation unit 34 presents information indicating that the intervention effect calculation is impossible, such as "error!" and "intervention calculation cannot be performed", and presents information indicating variables with insufficient data, such as "data of a combination of an address = "Kanto" and satisfaction with the service A = "4: slightly satisfied" is insufficient". Thus, the user can accurately grasp a cause of not being able to perform the intervention effect calculation.

Note that as the information to be presented to the user, the presentation unit 34 may display only information illustrated in a lower part of FIG. 4 (text information) or may also display information illustrated in an upper part of FIG. 4 (graphic model of the causal information 41).

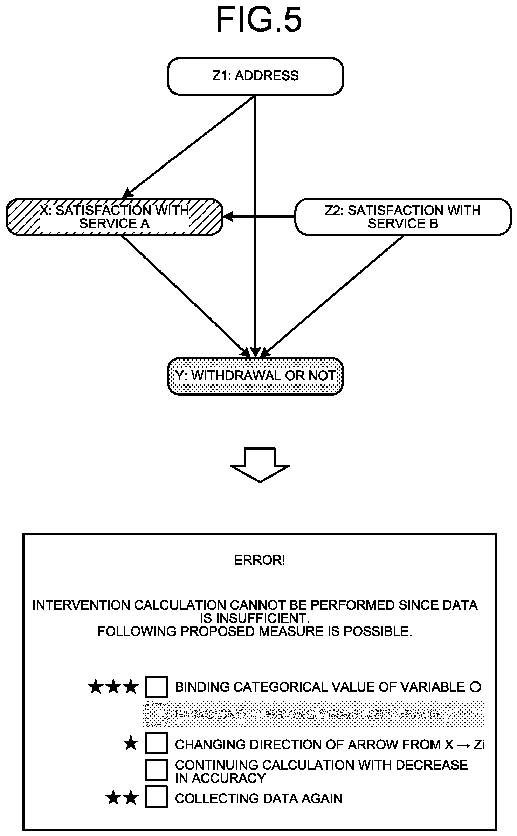

Then, as illustrated in FIG. 5, for example, the presentation unit 34 may present information indicating that the intervention effect calculation is impossible and present a proposed measure to satisfy the data of the variables necessary for the intervention effect calculation.

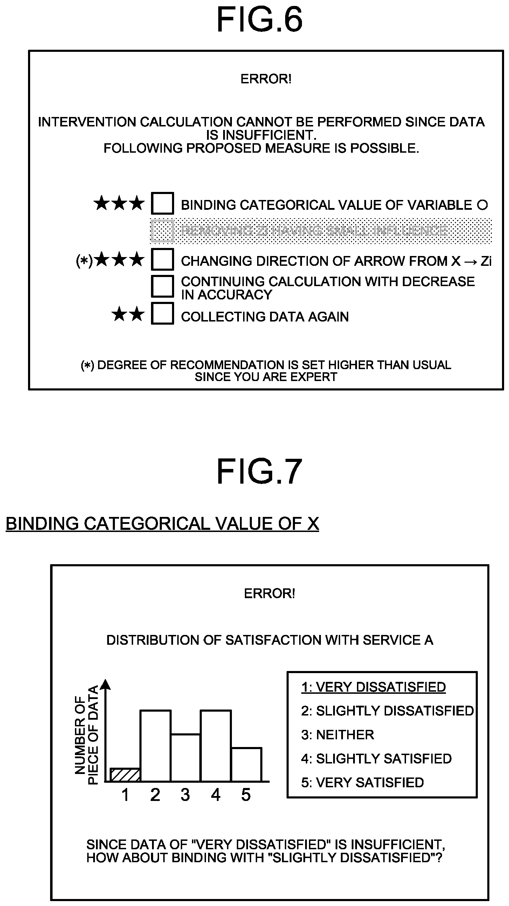

The following five proposed measures are presented and check boxes are displayed in FIG. 5. Note that specific contents of the proposed measures (1) to (5) will be described later with reference to FIG. 7 to FIG. 16.
(1) Binding categorical values of a variable ∘
(2) Removing Zi having a small influence
(3) Changing a direction of an arrow from X → Zi
(4) Continuing a calculation with a decrease in accuracy
(5) Collecting data again

Note that the "variable ∘" is an arbitrary variable related to this intervention effect calculation, and is the variable X, the variable Z1, or the variable Z2 in the example of FIG. 4. Also, it is assumed that "Zi" is the variable Z1 or the variable Z2 in the following.

Furthermore, as illustrated in FIG. 5, in a case where there is a proposed measure that does not solve data insufficiency even when being executed as the proposed measure, the presentation unit 34 displays the proposed measure ((2) removing Zi having a small influence in FIG. 5) lightly. That is, the presentation unit 34 changes a display mode of the proposed measure that cannot solve the data insufficiency from those of the other proposed measures. Thus, it is possible to prevent the user from erroneously selecting a meaningless proposed measure. Note that the proposed measure that cannot solve the data insufficiency may be hidden.

Furthermore, as illustrated in FIG. 5, in a case of presenting a plurality of proposed measures, the presentation unit 34 presents recommendation information based on a degree of proficiency of the user (black star illustrated in FIG. 5) for each proposed measure. Note that the degree of proficiency of the user is a degree indicating an abundance of experience in a data analysis.

For example, as illustrated in FIG. 6, in a case where the degree of proficiency of the user is high (experience is abundant), the presentation unit 34 makes the recommendation information of "changing a direction of an arrow from X → Zi" high. That is, for the proposed measure "changing a direction of an arrow from X → Zi", the presentation unit 34 dynamically changes the degree of the recommendation information according to the degree of proficiency since reliability of the intervention effect calculation is decreased when the proposed measure is performed by a user with low proficiency. Also, as illustrated in FIG. 6, the presentation unit 34 displays auxiliary information such as "a degree of recommendation is set higher than usual since you are an expert". Thus, it is possible to notify that high proficiency is required in a case where the proposed measure "changing a direction of an arrow from X → Zi" is executed.

Then, the reception unit 31 receives selection of at least one proposed measure (check of a check box) from the user. Subsequently, the presentation unit 34 presents specific information as illustrated in FIG. 7 to FIG. 14 for each of the proposed measures received by the reception unit 31. Hereinafter, the above-described proposed measures (1) to (5) will be described in detail.

### <(1) Binding categorical values of a variable ∘>

A specific example of the proposed measure "binding categorical values of a variable ∘" is illustrated in FIG. 7. In the example of FIG. 7, it is assumed that X among X, Z1, and Z2 that are candidates for the variable ∘ is selected by determination by a system, or by the user. In a case where the proposed measure "binding categorical values of a variable ∘" is selected by the user, the presentation unit 34 binds data of a value having insufficient data and data of another value with respect to a plurality of values (categorical values) included in the variable o.

A distribution of the number of pieces of data (number of customers) at each value of "satisfaction with the service A" that is the intervention variable X is illustrated in FIG. 7. Note that the values (1 to 5) of the "satisfaction with the service A" indicate "1: very dissatisfied", "2: slightly dissatisfied", "3: neither", "4: slightly satisfied", and "5: very satisfied", respectively.

Here, for example, it is assumed that the number of pieces of data of "1: very dissatisfied" is smaller than a predetermined threshold. In this case, the presentation unit 34 presents to bind the number of pieces of data of "1: very dissatisfied" and "2: slightly dissatisfied", for example. That is, the presentation unit 34 presents to regard two values "1: very dissatisfied" that is a value with the insufficient number of pieces of data and "2: slightly dissatisfied" that is a value with the sufficient number of pieces of data as one value, and to add up the number of pieces of data. That is, it is presented to regard two values having relatively similar contents as one value and to add up the number of pieces of data.

Then, in a case where the reception unit 31 receives an execution instruction for the proposed measure from the user, the proposed measure execution unit 35 executes the proposed measure presented by the presentation unit 34. That is, the proposed measure execution unit 35 binds "1: very dissatisfied" and "2: slightly dissatisfied", and adds up the number of pieces of data of the values. Note that the bound value in this case is preferably expressed as a value that can identify that "1: very dissatisfied" and "2: slightly dissatisfied" are bound.

As a result, since the number of pieces of data of the values regarded as one is the sum of the number of pieces of data of the two values, the number of pieces of data is not insufficient. In other words, by adding up the number of pieces of data of the two values, possible values of the variable X are reduced from five values to four values, and the data insufficiency is solved. Thus, execution of the intervention effect calculation by the intervention calculation unit 36 (described later) becomes possible.

Note that a case where values of a variable are bound is not limited to a case where a value having the insufficient number of pieces of data and a value having the sufficient number of pieces of data are bound. Values having the insufficient number of pieces of data may be bound as long as data insufficiency can be solved. Also, three or more values may be bound although a case where two values are bound is illustrated in FIG. 7.

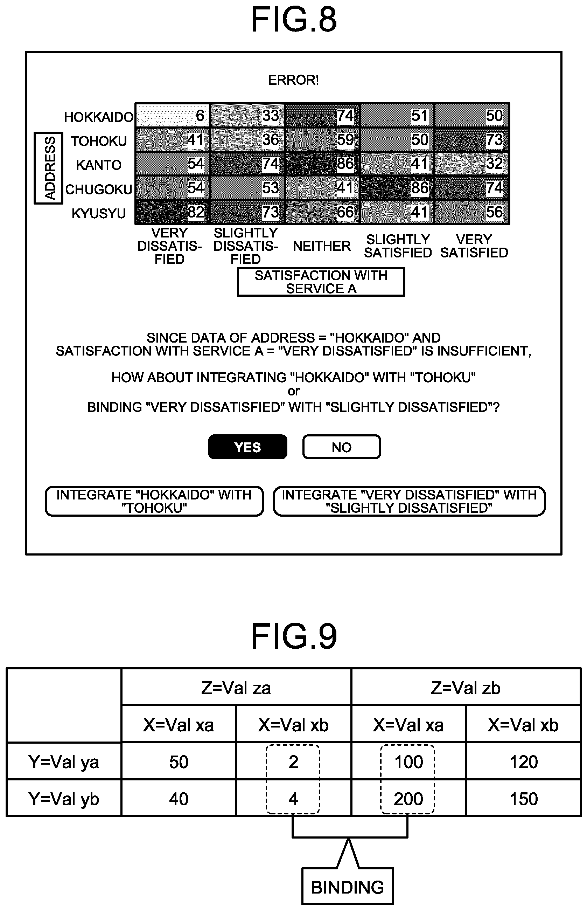

In addition, although binding processing of a case where the number of pieces of data of the one variable X is insufficient is illustrated in FIG. 7, the binding processing can be performed even in a case where data of a combination of a plurality of variables is insufficient. This point will be described with reference to FIG. 8.

In FIG. 8, it is assumed that data of a combination of the variable "address" and the variable "satisfaction with the service A" is insufficient. As illustrated in FIG. 8, in a case where data of a combination of a plurality of variables is insufficient, the presentation unit 34 visualizes information indicating the variables with insufficient data and performs presentation thereof to the user. Specifically, the presentation unit 34 displays, in a table format, a list of the number of pieces of data of a combination of variables including a variable with insufficient data. Furthermore, according to the number of pieces of data, the presentation unit 34 changes color information (shading or RGB) of a background of each item displayed in the table format. As a result, the user can easily grasp data of which combination of values in the plurality of variables is insufficient. Note that the presentation unit 34 is not limited to a case of changing the color information of the background of each item, and only needs to be able to change a display mode (such as character size) according to the number of pieces of data of each item.

Then, the presentation unit 34 presents binding of values of the variables together with the information in the table described above. In FIG. 8, the presentation unit 34 presents two binding methods in order to solve data insufficiency of a combination of "Hokkaido" and "very dissatisfied". Specifically, the presentation unit 34 presents a method of binding "Hokkaido" and "Tohoku" and a method of binding "very dissatisfied" and "slightly dissatisfied". That is, the presentation unit 34 solves the data insufficiency by either binding values of the variable "address" and reducing values from five to four, or binding values of the variable "satisfaction with the service A" and reducing the values from five to four.

Then, in a case where the reception unit 31 receives an instruction to execute any of the proposed measures from the user, the proposed measure execution unit 35 executes the selected proposed measure.

Also, as illustrated in FIG. 9, the presentation unit 34 internally performs binding processing, in which clustering processing on the values (categorical values) of the variable X and the variable Z is performed for each variable or in a combination pattern of the variables in such a manner that a region (each item of a combination of the variables) with the small number of pieces of data is eliminated and a condition under which the intervention effect calculation can be performed is satisfied, and does not perform presentation to the user.

Specifically, as illustrated in FIG. 8, the presentation unit 34 internally executes binding processing of eliminating a region, in which the number of pieces of data is insufficient, by clustering items having a similar distribution of values of the variables. More specifically, in the example illustrated in FIG. 8, the presentation unit 34 performs binding in a combination of the variable X and the variable Z.

### <(2) Removing Zi having a small influence>

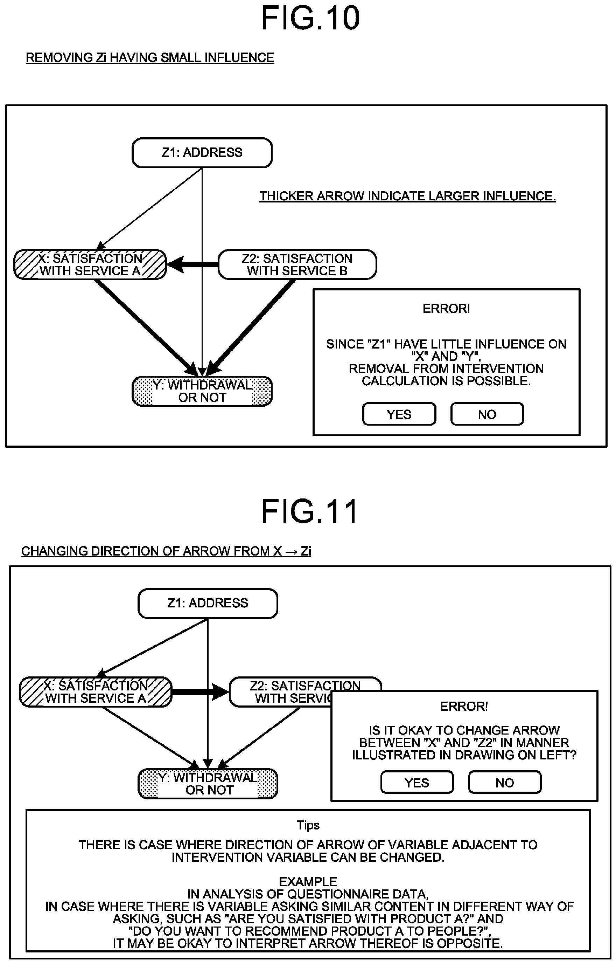

Next, a specific example of the proposed measure "removing Zi having a small influence" is illustrated in FIG. 10. In a case where the proposed measure "removing Zi having a small influence" is selected by the user, the presentation unit 34 presents the user to exclude, from the intervention effect calculation, a variable having a small influence on the intervention effect among the variables necessary for the intervention effect calculation.

Here, in FIG. 10, an arrow indicating a causal relationship between the variables is displayed thicker as a degree of influence on the intervention effect becomes larger. Note that the degree of influence on the intervention effect can be calculated, for example, on the basis of a change in a mutual information amount of the intervention variable X and the objective variable Y (interdependence amount between the two variables). Specifically, the degree of influence described above can be calculated as a difference between the mutual information amount of the intervention variable X and the objective variable Y of a case where each variable Z1 (or variable Z2) is conditioned and the mutual information amount of a case where each variable is not conditioned. That is, the degree of influence is smaller as this difference is smaller.

In the example illustrated in FIG. 10, the variable Z1 "address" has a small influence on the intervention effect calculation of a case where the intervention variable X and the objective variable Y are set. In other words, even when the variable Z1 "address" is removed from the intervention effect calculation, reliability of a calculation result is not decreased much.

Thus, the presentation unit 34 presents the user to remove the variable Z1 from the intervention effect calculation. As a result, for example, in a case where a cause for which the intervention effect calculation cannot be performed is data insufficiency of the variable Z1, by removal of the variable Z1 by the proposed measure execution unit 35, it becomes possible to perform the intervention effect calculation while minimizing a decrease in reliability of the calculation result.

Note that the presentation unit 34 may present only a variable having the smallest degree of influence as a variable to be removed from the intervention effect calculation, or may display a list of all variables arranged in order of the degree of influence and allow the user to select a variable to be removed from the calculation. Alternatively, the presentation unit 34 may present a variable having the degree of influence smaller than a predetermined threshold, that is, a variable in which the difference between the mutual information amounts described above is smaller than the predetermined threshold. Furthermore, for example, in a case where the mutual information amount of the variable X and the variable Z1 or the mutual information amount of the variable Y and the variable Z1 is smaller than the predetermined threshold, the presentation unit 34 may perform presentation as a variable to be removed from the calculation.

Note that the degree of influence described above is not limited to a case of being calculated on the basis of the mutual information amount of two variables, and may be calculated on the basis of, for example, another method such as a function of calculating a correlation between two variables, a function of calculating a similarity between two variables, or a propensity score. That is, the calculation can be performed by an arbitrary method of measuring a distance between two variables.

Note that with respect to the proposed measure "removing Zi having a small influence", the presentation unit 34 may internally perform processing of performing a removal from the calculation without presenting the proposed measure to the user in a case where the degree of influence described above is smaller than a predetermined threshold and there is no influence even when the removal from the calculation is performed.

### <(3) Changing a direction of an arrow from X → Zi>

Next, a specific example of the proposed measure "changing a direction of an arrow from X → Zi" is illustrated in FIG. 11. In a case where the proposed measure "change a direction of an arrow from X → Zi" is selected by the user, the presentation unit 34 presents the user to change a direction of cause and effect between the variables necessary for the intervention effect calculation.

It is presented in FIG. 11 that the variable Z2 → the variable X before the change is changed to the variable X → the variable Z1 after the change. Note that the user may arbitrarily select variables in which a direction of cause and effect is to be changed, or the control unit 3 may automatically select two variables with a high correlation, with a high similarity, or the like.

Also, as illustrated in FIG. 11, the presentation unit 34 presents the user with a proposed measure to change the direction of cause and effect and presents supplementary information related to this proposed measure. In the example illustrated in FIG. 10, together with the proposed measure, the presentation unit 34 displays "Tips" that is the supplementary information.

For example, as illustrated in FIG. 11, in "Tips" that is the supplementary information, information related to a specific example of a case where a direction of cause and effect between two variables can be changed is presented.

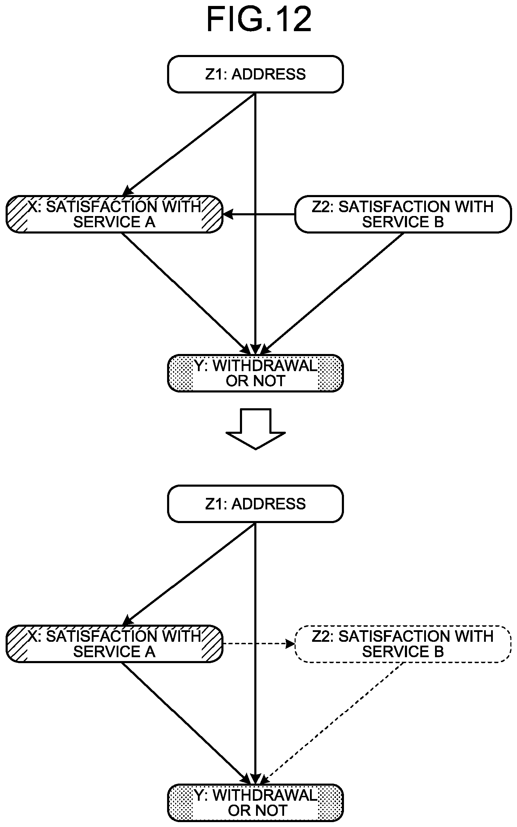

Then, in a case where the reception unit 31 receives an execution instruction for the proposed measure from the user, the proposed measure execution unit 35 executes the proposed measure. As a result, since the direction of cause and effect between the two variables is reversed, the variables necessary for the intervention effect calculation are changed as illustrated in FIG. 12.

A case where the direction of cause and effect between the variable X and the variable Z2 has changed is illustrated in FIG. 12. For example, in a case where the intervention variable X and the objective variable Y are set, the variable Z1 and the variable Z2 are variables necessary for the intervention effect calculation in a causal relationship before the change which relationship is illustrated in an upper part of FIG. 12.

Here, in a case where data of the variable Z2 is insufficient, the intervention effect calculation cannot be performed with the causal relationship illustrated in the upper part of FIG. 12. Thus, as illustrated in a lower part of FIG. 12, by changing the direction of cause and effect between the variable X and the variable Z2, the variable Z2 becomes no longer the variable necessary for the intervention effect calculation. That is, with the causal relationship illustrated in the lower part of FIG. 12, the intervention effect calculation can be performed in a case where the intervention variable X and the objective variable Y are set. In other words, since the variables necessary for the intervention effect calculation are changed (decreased) by the change in the direction of cause and effect, the variable with insufficient data becomes unnecessary for the calculation, and as a result, the data insufficiency can be solved.

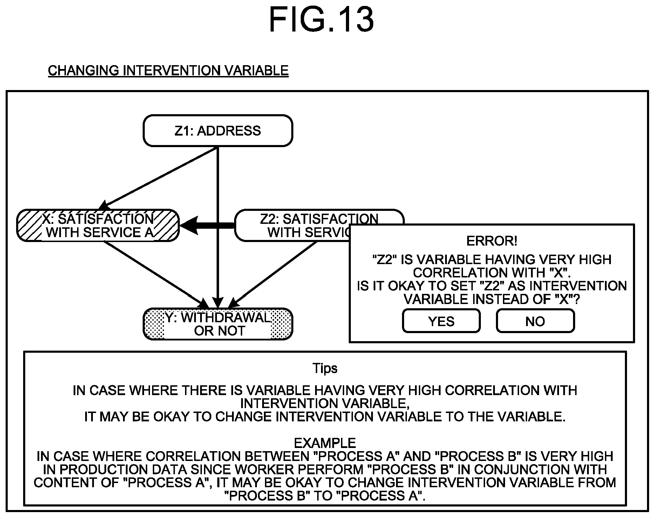

Also, in the example illustrated in FIG. 12, it has been presented that the direction of cause and effect is changed since the correlation or similarity between the variable X and the variable Z2 is high. However, in a case where the correlation or similarity between the variable X and the variable Z2 is high, it may be presented to change the variable to be intervened from the variable X to the variable Z2. This point will be described with reference to FIG. 13.

For example, as illustrated in FIG. 13, in a case where a correlation between the variable X and the variable Z2 (or degree of influence described above) is equal to or larger than a predetermined threshold, the presentation unit 34 presents to change the variable to be intervened from the variable X to the variable Z2. In other words, in a case where there is a variable having high correlation with the intervention variable before change, the presentation unit 34 presents to change the intervention variable to the variable. That is, as the proposed measure, the presentation unit 34 presents the user to change a variable to be intervened without changing the objective variable Y.

Thus, for example, in a case where the variable Z1 has insufficient data, the variable Z2 is set as an intervention variable and the variable Z1 becomes no longer a variable necessary for the intervention effect calculation. As a result, the data insufficiency of the variables necessary for the intervention effect calculation can be solved.

Also, as illustrated in FIG. 13, the presentation unit 34 presents the user with the proposed measure to change the intervention variable, and presents supplementary information related to this proposed measure. In the example illustrated in FIG. 13, together with the proposed measure, the presentation unit 34 displays "Tips" that is supplementary information.

For example, as illustrated in FIG. 13, information related to a specific example of a case where the intervention variable can be changed is presented in "Tips" that is the supplementary information.

### <(4) Continuing a calculation with a decrease in accuracy>

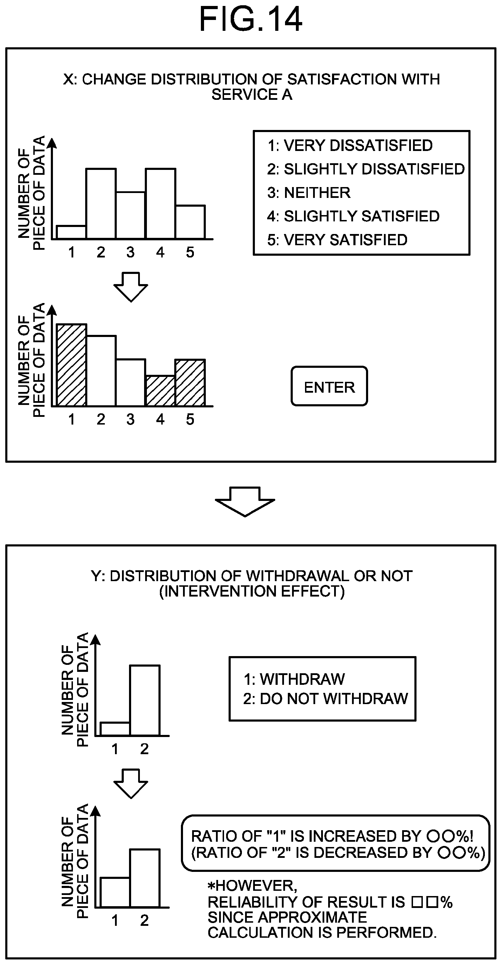

Next, a specific example of the proposed measure "continuing a calculation with a decrease in accuracy" is illustrated in FIG. 14. That is, in a case where the proposed measure "continuing a calculation with a decrease in accuracy" is selected by the user, the presentation unit 34 presents the user to continue the intervention effect calculation while presenting that the accuracy of the intervention effect calculation (reliability illustrated in a lower part of FIG. 14) is decreased.

Specifically, as illustrated in an upper part of FIG. 14, first, the presentation unit 34 displays information for the user to input intervention contents with respect to the intervention variable X. Specifically, the presentation unit 34 displays data of the variable X before the intervention and data of the variable X after the intervention according to user operation. That is, the user performs operation of changing a data distribution of the variable X after the intervention. Note that as illustrated in FIG. 14, among values of the variable X, it is preferable to change a display mode of a value intervened by the user from that of a value not intervened. In FIG. 14, data of the value intervened by the user is indicated by hatching.

Then, in a case where an "enter" button is operated by the user after the intervention operation, the intervention calculation unit 36 performs the intervention effect calculation, and the presentation unit 34 displays intervention information based on a calculation result of the intervention calculation unit 36. As illustrated in the lower part of FIG. 14, the intervention information presented by the presentation unit 34 includes data of the objective variable Y of before the intervention and after the intervention, and information related to a change in a ratio of the number of pieces of data (intervention effect) (ratio of "1" is increased by ∘∘%!).

Also, as illustrated in the lower part of FIG. 14, the presentation unit 34 presents the user with the intervention information including reliability of an intervention effect, such as "however, reliability of the result is □□% since an approximation calculation is performed". Note that the presentation of the reliability of the intervention effect by the presentation unit 34 is preferably performed only in a case where the determination unit 33 determines that data is insufficient and the intervention effect calculation is originally impossible. That is, in a case where the determination unit 33 determines that data of the variables necessary for the intervention effect calculation is sufficient, the presentation unit 34 does not present the information indicating the reliability of the intervention effect.

Note that in a case of calculating the above-described reliability (accuracy of the intervention effect calculation), the intervention calculation unit 36 repeatedly executes, for example, random sampling of data → the intervention effect calculation by using data of the variables necessary for the intervention effect calculation, and calculates the reliability by calculating variance of the calculation result. Alternatively, the intervention calculation unit 36 may calculate a normalized index corresponding to the number of pieces of data for each combination of the variables necessary for the intervention effect calculation, and calculate a minimum value thereof as the reliability.

Note that the presentation contents of when the intervention effect calculation is continued in a case where the determination unit 33 determines that data necessary for the intervention effect calculation is insufficient is illustrated in FIG. 14. However, for example, in a case where the determination unit 33 determines that the data necessary for the intervention effect calculation is sufficient, information substantially similar to that in FIG. 14 is basically presented except for the presentation of reliability.

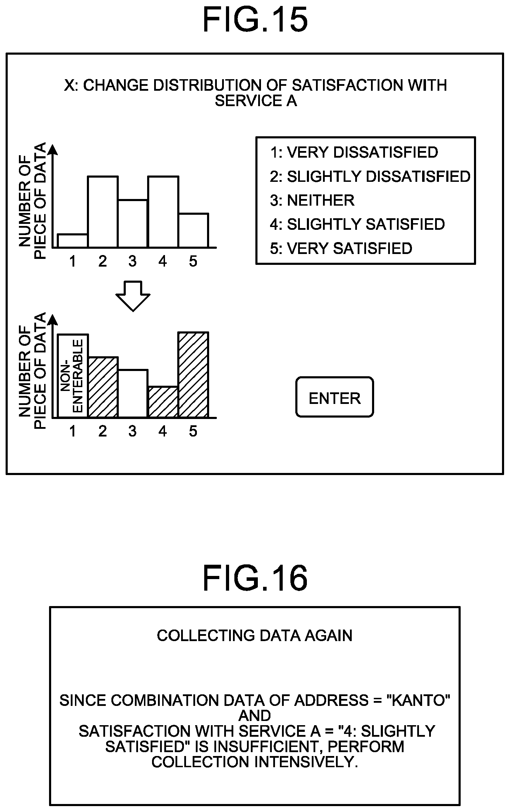

Also, for example, when the user is caused to change a distribution of the intervention variable, a limit may be imposed on a user interface (UI) in such a manner that the user cannot intervene in a value having a small number of pieces of data. This point will be described with reference to FIG. 15.

FIG. 15 is a view illustrating information presented by the presentation unit 34. In FIG. 15, it is assumed that the number of pieces of data of a value "1" is smaller than a predetermined number. In such a case, in a case where a distribution of the data of the variable X of after the intervention is displayed, the presentation unit 34 superimposes a display of "non-enterable" on the data of the value "1" in such a manner that the data of the value "1" cannot be changed.

That is, in a case where the intervention calculation unit 36 receives an intervention to calculate the intervention effect from the user, the presentation unit 34 prohibits reception of the intervention from the user with respect to a value with the number of pieces of data being smaller than the predetermined number among a plurality of values included in the variable X.

Thus, it is possible to prevent a low-reliability calculation result of the intervention effect from being presented since it is possible to prevent the user from intervening in the data of the value "1" with the number of pieces of data being insufficient.

Note that the intervention is prohibited by superimposition of the display of "non-enterable" on the data of the value "1" in FIG. 15. However, a display mode may be arbitrary. Data of a value, an intervention in the value being prohibited, may be displayed lightly or may be displayed with transparency, for example. Alternatively, it may be set, without a change in a display mode, that the data is not changed even in a case where the user performs operation to intervene. Furthermore, the presentation unit 34 may also display a reason for being "non-enterable" on a screen. For example, for the value "1", the presentation unit 34 may display that the data cannot be changed since the number of pieces of data is insufficient or that the data cannot be changed since reliability of the calculation result for the intervention effect is low due to the insufficiency of the number of pieces of data.

### <(5) Collecting data again>

Next, a specific example of the proposed measure "collecting data again" is illustrated in FIG. 16. In a case where the proposed measure "collecting data again" is selected by the user, the presentation unit 34 presents the user to collect data again while presenting information indicating a variable with insufficient data.

Specifically, as illustrated in FIG. 16, the presentation unit 34 presents the user to intensively collect "combination data of an address = "Kanto" and satisfaction with the service A = "4: slightly dissatisfied"" that is a combination of variables with insufficient data.

Note that in a case of presenting to collect data again, the presentation unit 34 is not limited to a case of performing a text display of the variables with insufficient data, and may also display information in a table in a manner illustrated in FIG. 8 (visualized information), for example.

### <<4. Flowchart of information processing>>

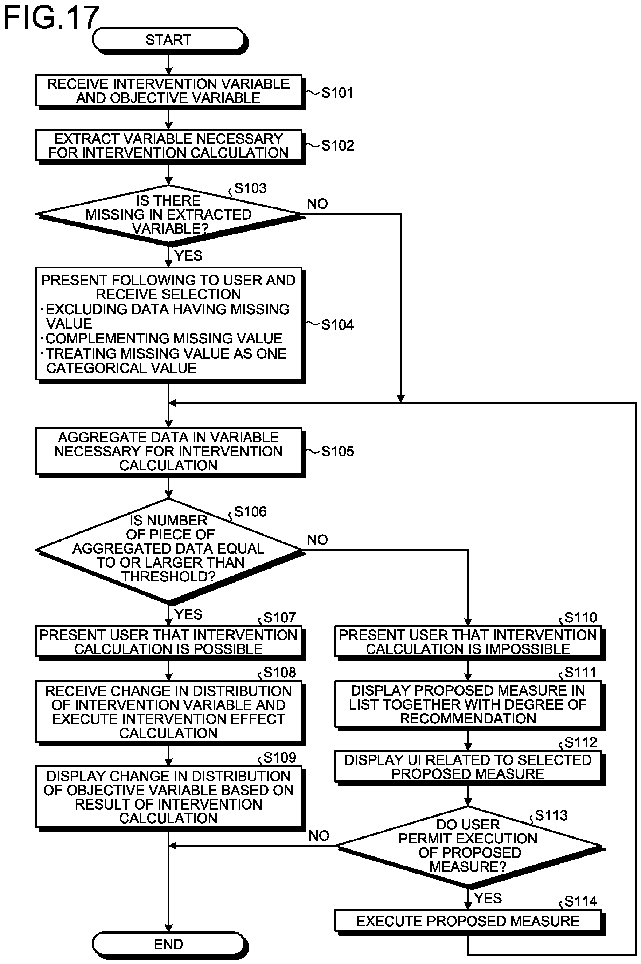

Next, a procedure of information processing executed by the information processing device 1 according to the embodiment will be described with reference to FIG. 17. FIG. 17 is a flowchart illustrating the procedure of the information processing executed by the information processing device 1 according to the embodiment. Note that it is assumed in FIG. 17 that the causal information 41 is generated in advance.

As illustrated in FIG. 17, first, the reception unit 31 receives selection of an intervention variable and an objective variable from the user from among variables in the causal information 41 (Step S101).

Subsequently, the extraction unit 32 extracts variables necessary for the intervention effect calculation (such as a confounding variable) from among the variables in the causal information 41 (Step S102).

Subsequently, the determination unit 33 determines whether there is missing data in the variables extracted by the extraction unit 32 (Step S103).

In a case where the determination unit 33 determines that there is missing data in the variables (Step S103: Yes), the presentation unit 34 presents the user with information including the following options (1) to (3), and the reception unit 31 receives selection of any of the options from the user (Step S104).
(1) Excluding data having a missing value
(2) Complementing a missing value
(3) Treating a missing value as one categorical value

Subsequently, the determination unit 33 performs processing corresponding to the option selected from among (1) to (3) on a variable having a missing value, and aggregates data for each combination of the variables necessary for the intervention effect calculation (Step S105).

Then, the determination unit 33 determines whether the number of pieces of the aggregated data is equal to or larger than a threshold (Step S106). That is, the determination unit 33 determines an insufficiency of the data of the variables necessary for the intervention effect calculation.

In a case where the number of pieces of the aggregated data is equal to or larger than the threshold, that is, in a case where the data of the variables necessary for the intervention effect calculation is sufficient (Step S106: Yes), the presentation unit 34 presents the user that the intervention effect calculation is possible (Step S107).

Subsequently, the reception unit 31 receives a change in a distribution of the intervention variable from the user, and the intervention calculation unit 36 executes the intervention effect calculation in the objective variable on the basis of intervention contents received from the user (Step S108).

Subsequently, the presentation unit 34 presents the user with a change in a distribution of the objective variable based on a calculation result of the intervention calculation unit 36 (Step S109), and ends the processing.

On the other hand, in a case where there is no missing data in the extracted variables in Step S103 (Step S103: No), the control unit 3 advances the processing to Step S105.

Also, in a case where the number of pieces of the aggregated data is smaller than the threshold, that is, in a case where the data of the variables necessary for the intervention effect calculation is insufficient in Step S106 (Step S106: No), the presentation unit 34 presents the user that the intervention effect calculation is impossible (Step S110).

Furthermore, the presentation unit 34 displays a list of proposed measures together with recommendation information indicating a degree of recommendation (Step S111). Subsequently, the presentation unit 34 receives selection of one proposed measure from the user and displays information related to the received proposed measure (Step S112).

Subsequently, the proposed measure execution unit 35 determines whether the user performs operation of permitting execution of the proposed measure (Step S113), and ends the processing in a case where operation of not permitting the execution of the proposed measure is performed (Step S113: No).

On the other hand, in a case where the user performs the operation of permitting the execution of the proposed measure (Step S113: Yes), the proposed measure execution unit 35 executes the proposed measure (Step S114) and advances the processing to Step S105.

### <<5. Hardware configuration example>>

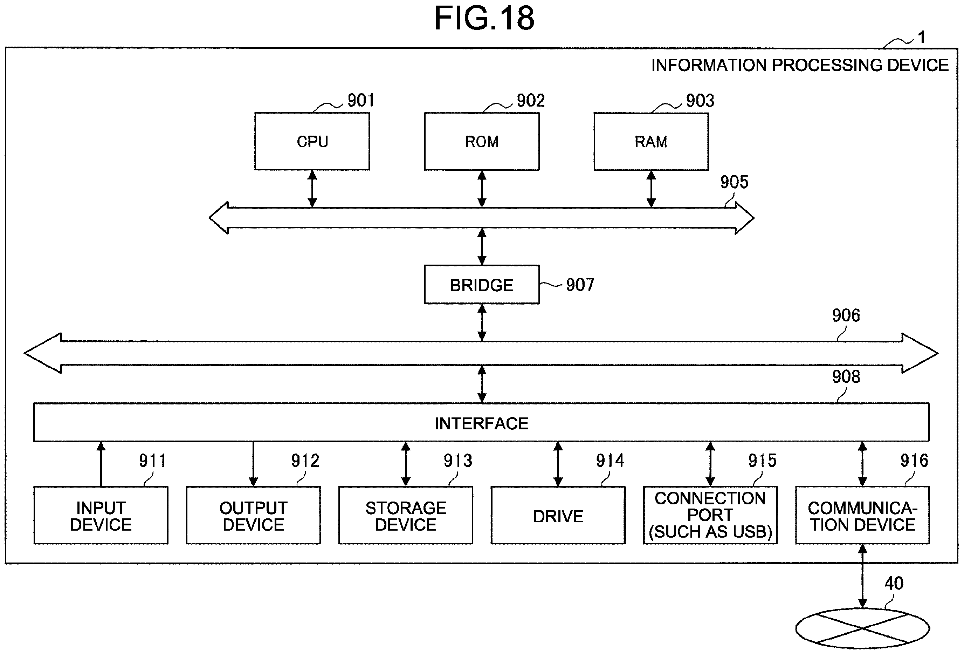

Next, an example of a hardware configuration of the information processing device 1 and the like according to the present embodiment will be described with reference to FIG. 18. FIG. 18 is a block diagram illustrating the example of the hardware configuration of the information processing device 1 according to the present embodiment.

As illustrated in FIG. 18, the information processing device 1 includes a central processing unit (CPU) 901, a read only memory (ROM) 902, a random access memory (RAM) 903, a host bus 905, a bridge 907, an external bus 906, an interface 908, an input device 911, an output device 912, a storage device 913, a drive 914, a connection port 915, and a communication device 916. An information processing device 20 may include an electric circuit, and a processing circuit such as a DSP or an ASIC instead of or in addition to the CPU 901.

The CPU 901 functions as an arithmetic processing device and a control device, and controls overall operations in the information processing device 20 according to various kinds of programs. Also, the CPU 901 may be a microprocessor. The ROM 902 stores programs, operation parameters, and the like used by the CPU 901.

The RAM 903 temporarily stores programs used in execution of the CPU 901, parameters that appropriately change in the execution, and the like. For example, the CPU 901 may execute functions of the reception unit 31, the extraction unit 32, the determination unit 33, the presentation unit 34, the proposed measure execution unit 35, and the intervention calculation unit 36.

The CPU 901, the ROM 902, and the RAM 903 are connected to each other by the host bus 905 including a CPU bus and the like. The host bus 905 is connected to the external bus 906 such as a peripheral component interconnect/interface (PCI) bus via the bridge 907. Note that the host bus 905, the bridge 907, and the external bus 906 are not necessarily configured in a separated manner, and the functions thereof may be mounted on one bus.

The input device 911 is a device to which information is input by the user and which is a mouse, keyboard, touch panel, button, microphone, switch, lever, or the like, for example. Alternatively, the input device 911 may be a remote control device using infrared rays or other radio waves, or may be an external connection device such as a cellular phone or a PDA corresponding to operation of the information processing device 1. Moreover, the input device 911 may include, for example, an input control circuit or the like that generates an input signal on the basis of the information input by the user with the above-described input means.

The output device 912 is a device capable of visually or aurally notifying the user of information. For example, the output device 912 may be a display device such as a cathode ray tube (CRT) display device, a liquid-crystal display device, a plasma display device, an electroluminescence (EL) display device, a laser projector, a light emitting diode (LED) projector, or a lamp, or may be a sound output device such as a speaker or a headphone, or the like.

The output device 912 may output, for example, a result acquired by various kinds of processing by the information processing device 1. Specifically, the output device 912 may visually display the result, which is acquired by the various kinds of processing by the information processing device 1, in various forms such as a text, image, table, or graph. Alternatively, the output device 912 may convert an audio signal such as audio data or acoustic data into an analog signal and aurally output the analog signal. The input device 911 and the output device 912 may execute a function of an interface, for example.

The storage device 913 is a device that is for data storage and that is formed as an example of the storage unit 4 of the information processing device 1. The storage device 913 may be realized, for example, by a magnetic storage device such as a hard disk drive (HDD), a semiconductor storage device, an optical storage device, a magneto-optical storage device, or the like. For example, the storage device 913 may include a storage medium, a recording device that records data into the storage medium, a reading device that reads data from the storage medium, a deletion device that deletes data recorded in the storage medium, and the like. The storage device 913 may store the programs executed by the CPU 901, various kinds of data, various kinds of data acquired from the outside, and the like. For example, the storage device 913 may execute a function of storing the causal information 41 and the customer information 42.

The drive 914 is a reader/writer for the storage medium, and is built in or externally attached to the information processing device 1. The drive 914 reads information recorded in a mounted removable storage medium such as a magnetic disk, optical disk, magneto-optical disk, or semiconductor memory, and performs an output thereof to the RAM 903. Also, the drive 914 can write information into the removable storage medium.

The connection port 915 is an interface connected to an external device. The connection port 915 is a connection port capable of transmitting data to the external device, and may be a universal serial bus (USB), for example.

The communication device 916 is, for example, an interface formed of a communication device or the like for connection to a network 920. The communication device 916 may be, for example, a communication card for a wired or wireless local area network (LAN), long term evolution (LTE), Bluetooth (registered trademark), or a wireless USB (WUSB), or the like. Also, the communication device 916 may be a router for optical communication, a router for an asymmetric digital subscriber line (ADSL), a modem for various kinds of communication, or the like. On the basis of a predetermined protocol such as TCP/IP, the communication device 916 can transmit/receive a signal or the like to/from the Internet or another communication equipment, for example.

Note that a network 40 is a wired or wireless transmission path of information. For example, the network 40 may include a public network such as the Internet, a telephone network, or a satellite communication network, various local area networks (LAN) including Ethernet (registered trademark), a wide area network (WAN), or the like. Also, the network 920 may include a dedicated network such as the Internet protocol-virtual private network (IP-VPN).

Note that a computer program for causing the hardware such as the CPU, the ROM, and the RAM built in the information processing device 1 to perform functions equivalent to those of the components of the above-described information processing device 1 according to the present embodiment can be also created. Also, it is possible to provide a storage medium that stores the computer program.

Also, among the pieces of processing described in the above embodiments, all or a part of the processing described to be automatically performed can be manually performed, or all or a part of the processing described to be manually performed can be automatically performed by a known method. In addition, a processing procedure, specific name, and information including various kinds of data and parameters illustrated in the above document or in the drawings can be arbitrarily changed unless otherwise specified. For example, various kinds of information illustrated in each drawing are not limited to the illustrated information.

Also, each component of each of the illustrated devices is a functional concept, and does not need to be physically configured in a manner illustrated in the drawings. That is, a specific form of distribution/integration of each device is not limited to what is illustrated in the drawings, and a whole or part thereof can be functionally or physically distributed/integrated in an arbitrary unit according to various loads and usage conditions.

In addition, the above-described embodiments can be arbitrarily combined in a region in which the processing contents do not contradict each other. Furthermore, order of steps illustrated in the flowchart and the sequence diagram of the above-described embodiments can be changed as appropriate.

### <<6. Conclusion>>

As described above, according to an embodiment of the present disclosure, the information processing device 1 includes the determination unit 33 and the presentation unit 34. In a case where a calculation of an intervention effect generated in an objective variable by an intervention in any variable among a plurality of variables is performed on the basis of the causal information 41 indicating a causal relationship between the plurality of variables, the determination unit 33 determines whether data of variables necessary for the calculation is insufficient. The presentation unit 34 presents the user with information based on a determination result of the determination unit 33.

As a result, it is possible to prevent a calculation result with low accuracy from being presented without intention of the user, and it is also possible to tell the user that the current number of pieces of data is insufficient. Thus, it is possible to present appropriate information to the user according to a data status for performing the intervention effect calculation.

Also, in a case where the determination unit 33 determines that the data of the variables necessary for the calculation is insufficient, the presentation unit 34 presents the user with information indicating that the calculation is impossible.

Thus, it is possible to prevent a calculation result with low accuracy from being presented.

Also, in a case where the determination unit 33 determines that the data of the variables necessary for the calculation is insufficient, the presentation unit 34 presents the user with information indicating a variable with insufficient data.

Thus, the user can grasp data of which variable is insufficient.

Also, in a case where data of a combination of a plurality of variables is insufficient, the presentation unit 34 visualizes information indicating variables with insufficient data and performs presentation thereof to the user.

Thus, the user can intuitively grasp data of which combination is insufficient among pieces of data of combinations of a plurality of variables.

Also, in a case where the determination unit 33 determines that the data of the variables necessary for the calculation is insufficient, the presentation unit 34 presents the user with a proposed measure to satisfy the data of the variables necessary for the calculation.

Thus, it is possible to present the user that the data insufficiency can be solved even with the current number of pieces of data.

Also, as a proposed measure, the presentation unit 34 presents the user to bind data of a value having insufficient data and data of another value with respect to a plurality of values included in a variable.

Thus, it is possible to solve the data insufficiency since it is possible to bind possible values of the variable and to add up the number of pieces of data.

Also, as a proposed measure, the presentation unit 34 presents the user to exclude, from the calculation, a variable having a small influence on the intervention effect among the variables necessary for the calculation.

Thus, in a case where the influence of the variable with insufficient data is small, the variable can be removed from the intervention effect calculation. Thus, the data insufficiency of the variables necessary for the intervention effect calculation can be solved.

Also, as a proposed measure, the presentation unit 34 presents the user to change a direction of cause and effect between the variables necessary for the calculation.

Thus, since variables necessary for the intervention effect calculation are changed and the variable with insufficient data becomes unnecessary for the intervention effect calculation, the data insufficiency of the variables necessary for the intervention effect calculation can be solved.

Also, as a proposed measure, the presentation unit 34 presents the user to continue a calculation while presenting that accuracy of the calculation is decreased.

Thus, for example, a user who does not want to change contents of the data can perform the intervention effect calculation.

Also, as a proposed measure, the presentation unit 34 presents the user to collect data again while presenting information indicating a variable with insufficient data.

Thus, when the data is collected again, it is possible to present the user which data is likely to be insufficient.

Also, as a proposed measure, the presentation unit 34 presents the user to change a variable to be intervened without changing the objective variable.

Thus, since variables necessary for the intervention effect calculation are changed and the variable with insufficient data becomes unnecessary for the intervention effect calculation, the data insufficiency of the variables necessary for the intervention effect calculation can be solved.

Also, together with a proposed measure, the presentation unit 34 presents the user with supplementary information related to the proposed measure.

Thus, the user can understand contents of the proposed measure more deeply.

Also, in a case of presenting a plurality of proposed measures, the presentation unit 34 presents, for each of the proposed measures, recommendation information based on a degree of proficiency of the user.

Thus, it is possible to recommend an appropriate proposed measure according to the degree of proficiency of the user.

Also, the information processing device 1 according to the embodiment further includes the intervention calculation unit 36. In a case where the determination unit 33 determines that the data of the variables necessary for the calculation is sufficient, the intervention calculation unit 36 calculates the intervention effect in the objective variable on the basis of intervention contents received from the user. The presentation unit 34 presents the user with intervention information based on a calculation result of the intervention calculation unit 36.

Thus, the intervention information is not presented in a case where the data of the variables is insufficient, and the calculation result for the intervention effect can be presented to the user only in a case where the data is sufficient.

Also, in a case where the intervention calculation unit 36 receives an intervention for calculating the intervention effect from the user, the presentation unit 34 prohibits reception of the intervention from the user with respect to a value with the number of pieces of data being smaller than a predetermined number among a plurality of values included in a variable.

Thus, since it is possible to prevent the user from intervening in the data of the value with the number of pieces of data being insufficient, it is possible to prevent a low-reliability calculation result for the intervention effect from being presented.

Also, the presentation unit 34 presents the user with intervention information including an intervention effect and reliability of the intervention effect.

Thus, it is possible to indicate how much the user can trust the intervention effect that is the calculation result.

Also, the presentation unit 34 presents the user with intervention information including data of the intervened variable and the objective variable of before and after the intervention.

This allows the user to easily grasp states of the intervention variable and the objective variable of before and after the intervention.

Although embodiments of the present disclosure have been described above, the technical scope of the present disclosure is not limited to the above-described embodiments as they are, and various modifications can be made within the spirit and scope of the present disclosure. Also, components of different embodiments and modification examples may be arbitrarily combined.

Also, an effect in each of the embodiments described in the present description is merely an example and is not a limitation, and there may be a different effect.

Note that the present technology can also have the following configurations.
(1) An information processing device comprising:
   a determination unit that determines, in a case where a calculation of an intervention effect generated in an objective variable by an intervention in any of a plurality of variables is performed on a basis of causal information indicating a causal relationship between the plurality of variables, whether data of the variables necessary for the calculation is insufficient; and
   a presentation unit that presents a user with information based on a determination result of the determination unit.
(2) The information processing device according to (1), wherein
   the presentation unit
   presents the user with information indicating that the calculation is impossible in a case where the determination unit determines that the data of the variables necessary for the calculation is insufficient.
(3) The information processing device according to (1), wherein
   the presentation unit presents the user with information indicating a variable with insufficient data in a case where the determination unit determines that the data of the variables necessary for the calculation is insufficient.
(4) The information processing device according to (3), wherein
   the presentation unit
   visualizes the information indicating the variable with insufficient data and performs presentation thereof to the user in a case where data of a combination of a plurality of variables is insufficient.
(5) The information processing device according to (1), wherein
   the presentation unit
   presents the user with a proposed measure to satisfy the data of the variables necessary for the calculation in a case where the determination unit determines that the data of the variables necessary for the calculation is insufficient.
(6) The information processing device according to (5), wherein
   the presentation unit
   presents the user, as the proposed measure, to bind data of a value having insufficient data and data of another value with respect to a plurality of values included in a variable.
(7) The information processing device according to (5), wherein
   the presentation unit
   presents the user, as the proposed measure, to exclude a variable having a small influence on the intervention effect from the calculation among the variables necessary for the calculation.
(8) The information processing device according to (5), wherein
   the presentation unit
   presents the user, as the proposed measure, to change a direction of cause and effect between the variables necessary for the calculation.
(9) The information processing device according to (5), wherein
   the presentation unit
   presents the user, as the proposed measure, to continue the calculation while presenting that accuracy of the calculation is decreased.
(10) The information processing device according to (5), wherein
   the presentation unit
   presents the user, as the proposed measure, to collect data again while presenting information indicating a variable with insufficient data.
(11) The information processing device according to (5), wherein
   the presentation unit
   presents the user, as the proposed measure, to change the variable to be intervened without changing the objective variable.
(12) The information processing device according to (5), wherein
   the presentation unit
   presents the user, together with the proposed measure, supplementary information related to the proposed measure.
(13) The information processing device according to (5), wherein
   the presentation unit
   presents, in a case of presenting a plurality of the proposed measures, recommendation information for each of the proposed measures, the recommendation information being based on a degree of proficiency of the user.
(14) The information processing device according to (1), further comprising an intervention calculation unit that performs a calculation of the intervention effect in the objective variable on a basis of intervention contents received from the user in a case where the determination unit determines that the data of the variables necessary for the calculation is sufficient, wherein
   the presentation unit presents the user with intervention information based on a calculation result of the intervention calculation unit.
(15) The information processing device according to (14), wherein
   the presentation unit
   prohibits, in a case where the intervention calculation unit receives an intervention for calculating the intervention effect from the user, reception of the intervention with respect to a value with a number of pieces of data being smaller than a predetermined number among a plurality of values included in a variable.
(16) The information processing device according to (14), wherein
   the presentation unit
   presents the user with the intervention information including the intervention effect and reliability of the intervention effect.
(17) The information processing device according to (14), wherein
   the presentation unit
   presents the user with the intervention information including data of the intervened variable and the objective variable of before and after the intervention.
(18) An information processing method comprising:
   a determination step of determining, in a case where a calculation of an intervention effect generated in an objective variable by an intervention in any of a plurality of variables is performed on a basis of causal information indicating a causal relationship between the plurality of variables, whether data of the variables necessary for the calculation is insufficient; and
   a presentation step of presenting a user with information based on a determination result of the determination step.
(19) An information processing program causing, by being read by a computer, the computer to function as
   a determination unit that determines, in a case where a calculation of an intervention effect generated in an objective variable by an intervention in any of a plurality of variables is performed on a basis of causal information indicating a causal relationship between the plurality of variables, whether data of the variables necessary for the calculation is insufficient, and
   a presentation unit that presents a user with information based on a determination result of the determination unit.

### Reference Signs List

- 1: INFORMATION PROCESSING DEVICE

- 2: COMMUNICATION UNIT
- 3: CONTROL UNIT
- 4: STORAGE UNIT
- 11: USER TERMINAL
- 31: RECEPTION UNIT
- 32: EXTRACTION UNIT
- 33: DETERMINATION UNIT
- 34: PRESENTATION UNIT
- 35: PROPOSED MEASURE EXECUTION UNIT
- 36: INTERVENTION CALCULATION UNIT
- 41: CAUSAL INFORMATION
- 42: CUSTOMER INFORMATION

## Claims

1. An information processing device comprising:
a determination unit that determines, in a case where a calculation of an intervention effect generated in an objective variable by an intervention in any of a plurality of variables is performed on a basis of causal information indicating a causal relationship between the plurality of variables, whether data of the variables necessary for the calculation is insufficient; and
a presentation unit that presents a user with information based on a determination result of the determination unit.

2. The information processing device according to claim 1, wherein
the presentation unit
presents the user with information indicating that the calculation is impossible in a case where the determination unit determines that the data of the variables necessary for the calculation is insufficient.

3. The information processing device according to claim 1, wherein
the presentation unit
presents the user with information indicating a variable with insufficient data in a case where the determination unit determines that the data of the variables necessary for the calculation is insufficient.

4. The information processing device according to claim 3, wherein
the presentation unit
visualizes the information indicating the variable with insufficient data and performs presentation thereof to the user in a case where data of a combination of a plurality of variables is insufficient.

5. The information processing device according to claim 1, wherein
the presentation unit
presents the user with a proposed measure to satisfy the data of the variables necessary for the calculation in a case where the determination unit determines that the data of the variables necessary for the calculation is insufficient.

6. The information processing device according to claim 5, wherein
the presentation unit
presents the user, as the proposed measure, to bind data of a value having insufficient data and data of another value with respect to a plurality of values included in a variable.

7. The information processing device according to claim 5, wherein
the presentation unit
presents the user, as the proposed measure, to exclude a variable having a small influence on the intervention effect from the calculation among the variables necessary for the calculation.

8. The information processing device according to claim 5, wherein
the presentation unit
presents the user, as the proposed measure, to change a direction of cause and effect between the variables necessary for the calculation.

9. The information processing device according to claim 5, wherein
the presentation unit
presents the user, as the proposed measure, to continue the calculation while presenting that accuracy of the calculation is decreased.

10. The information processing device according to claim 5, wherein
the presentation unit
presents the user, as the proposed measure, to collect data again while presenting information indicating a variable with insufficient data.

11. The information processing device according to claim 5, wherein
the presentation unit
presents the user, as the proposed measure, to change the variable to be intervened without changing the objective variable.

12. The information processing device according to claim 5, wherein
the presentation unit
presents the user, together with the proposed measure, supplementary information related to the proposed measure.

13. The information processing device according to claim 5, wherein
the presentation unit
presents, in a case of presenting a plurality of the proposed measures, recommendation information for each of the proposed measures, the recommendation information being based on a degree of proficiency of the user.

14. The information processing device according to claim 1, further comprising an intervention calculation unit that performs a calculation of the intervention effect in the objective variable on a basis of intervention contents received from the user in a case where the determination unit determines that the data of the variables necessary for the calculation is sufficient, wherein
the presentation unit
presents the user with intervention information based on a calculation result of the intervention calculation unit.

15. The information processing device according to claim 14, wherein
the presentation unit
prohibits, in a case where the intervention calculation unit receives an intervention for calculating the intervention effect from the user, reception of the intervention with respect to a value with a number of pieces of data being smaller than a predetermined number among a plurality of values included in a variable.

16. The information processing device according to claim 14, wherein
the presentation unit
presents the user with the intervention information including the intervention effect and reliability of the intervention effect.

17. The information processing device according to claim 14, wherein
the presentation unit
presents the user with the intervention information including data of the intervened variable and the objective variable of before and after the intervention.

18. An information processing method comprising:
a determination step of determining, in a case where a calculation of an intervention effect generated in an objective variable by an intervention in any of a plurality of variables is performed on a basis of causal information indicating a causal relationship between the plurality of variables, whether data of the variables necessary for the calculation is insufficient; and
a presentation step of presenting a user with information based on a determination result of the determination step.

19. An information processing program causing, by being read by a computer, the computer to function as
a determination unit that determines, in a case where a calculation of an intervention effect generated in an objective variable by an intervention in any of a plurality of variables is performed on a basis of causal information indicating a causal relationship between the plurality of variables, whether data of the variables necessary for the calculation is insufficient, and
a presentation unit that presents a user with information based on a determination result of the determination unit.
